# EUROPÄISCHE PATENTSCHRIFT

(11) **EP 2 754 233 B1**
(45) Veröffentlichungstag und Bekanntmachung des Hinweises auf die Patenterteilung: **21.10.2015**
(21) Anmeldenummer: 12753478.2
(22) Anmeldetag: 29.08.2012
(51) Int. Cl.: H02M 1/36, G05B 19/042

(54) **STEUERUNG FÜR EIN ELEKTRISCH VERSTELLBARES MÖBEL**
CONTROL MEANS FOR AN ELECTRICALLY ADJUSTABLE ITEM OF FURNITURE
COMMANDE POUR MEUBLE RÉGLABLE ÉLECTRIQUEMENT

(30) Priorität: 08.09.2011 DE 102011113933
(43) Veröffentlichungstag der Anmeldung: 16.07.2014
(73) Patentinhaber: Logicdata Electronic&Software Entwicklungs GmbH, 8530 Deutschlandsberg (AT)
(72) Erfinder: SCHENK, Mario, A-8524 Bad Gams (AT); LUKAS, Stefan, A-8504 Preding (AT)
(74) Vertreter: Epping - Hermann - Fischer
(86) Internationale Anmeldenummer: PCT/EP2012/066763
(87) Internationale Veröffentlichungsnummer: WO 2013/034475

(56) Entgegenhaltungen:
- DE-A1- 4 404 131
- DE-A1- 19 943 124
- DE-A1-102008 051 247
- DE-A1-102008 056 914

## Beschreibung

Die Erfindung betrifft eine Steuerung mit einem Steuerteil, das zur Ansteuerung eines elektrisch verstellbaren Möbels eingerichtet ist, und mit einem Schaltnetzteil.

Es werden zunehmend elektrisch verstellbare Möbel angeboten. So ist bei vielen Tischen, insbesondere bei Schreibtischen, die Höhe der Tischplatte über einen speziellen Antrieb elektrisch verstellbar. Auch Betten, beispielsweise Komfortbetten oder Krankenhausbetten, lassen sich über elektrische Antriebe etwa in Höhe oder Neigungswinkel des Bettes einstellen.

Dabei ist es möglich Gleichstrommotoren für den Antrieb der elektrischen Verstelleinrichtung einzusetzen, die mit einer Niederspannung betrieben werden. Dafür wird die Netzspannung beispielsweise über ein Schaltnetzteil in den niedrigeren Spannungsbereich der Gleichstrommotoren herabgesetzt. Die Ansteuerung der Gleichstrommotoren in einer zugeordneten Steuerung erfolgt durch ein gesteuertes Verbinden der Motoren mit der Gleichspannung.

Eine weitere Möglichkeit für einen Antrieb eines elektrisch verstellbaren Möbels liegt in der Verwendung eines oder mehrerer Wechselstrommotoren, für die ebenfalls eine Steuerung vorgesehen ist. In diesem Fall kann für die Steuerung die Netzwechselspannung in einen niedrigeren Wechselspannungsbereich herab transformiert werden, um mit der herab transformierten Wechselspannung die Wechselstrommotoren gesteuert zu verbinden. Alternativ kann eine Wechselspannung zum Ansteuern der Wechselstrommotoren aus einer Gleichspannung abgeleitet werden, welche über ein Schaltnetzteil bereitgestellt wird.

Um die Verlustleistung im Schaltnetzteil einer solchen Steuerung gering zu halten kann es wünschenswert sein, das Schaltnetzteil entweder in einem normalen Betriebsmodus zu betreiben, in dem Spannung für die Steuerung benötigt wird, oder in einem Ruhebetriebszustand, in dem vom Schaltnetzteil keine oder nur eine zum Normalbetrieb vernachlässigbare Leistung abgegeben wird. Um ein schnelles Umschalten von dem Ruhebetriebszustand in den Normalbetriebszustand zu ermöglichen, wird eine Versorgung relevanter Baugruppen beispielsweise über eine Anlaufschaltung durchgeführt, welche eine zum Hochfahren des Schaltbetriebs notwendige Energie zur Verfügung stellt.

Steuerungen mit einer solchen Anlaufschaltung sind etwa aus der DE 10 2008 056 914 A1 oder der DE 10 2008 051 247 A1 bekannt.

Wenn im Betrieb der Steuerung die Netzspannung ausfällt, endet der Betrieb der Steuerung üblicherweise spätestens dann, wenn die in Pufferkapazitäten gespeicherte Energie aufgebraucht ist. Bei einem solchen Netzspannungsausfall ist es daher wünschenswert, diesen so früh als möglich zu erkennen und beispielsweise noch fahrende Motoren geordnet zu stoppen sowie Betriebsdaten zu speichern. Bei einem herkömmlichen Netzteil mit einem Transformator lässt sich ein Signal zur Netzspannungsausfallerkennung beispielsweise an den Transformatorwicklungen generieren. Dies ist bei einem herkömmlichen Schaltnetzteil ohne Transformator nicht möglich.

Ein Netzspannungsausfall kann auch über einen Optokoppler detektiert werden. Dies ist etwa in der DE 44 04 131 A1 für eine allgemeine speicherprogrammierbare Steuerung außerhalb des Möbelbereichs, oder in der DE 199 43 124 A1 in Zusammenhang mit einem programmgesteuerten Haushaltsgerät beschrieben.

Eine zu lösende Aufgabe besteht darin, eine Steuerung für ein elektrisch verstellbares Möbel mit einem Schaltnetzteil bereitzustellen, welche eine effiziente Netzausfallerkennung ermöglicht.

Diese Aufgabe wird mit dem Gegenstand des unabhängigen Patentanspruchs gelöst. Ausgestaltungsformen und Weiterbildungen der Erfindung sind Gegenstand der abhängigen Ansprüche.

Beispielsweise weist ein Schaltnetzteil eine Steuerung für ein elektrisch verstellbares Möbel eine Anlaufschaltung auf, die einen Schaltreglerbaustein des Schaltnetzteils in einem Ruhebetriebszustand versorgt. Ferner weist das Schaltnetzteil eine Netzausfallerkennungsschaltung auf, welche in der Lage ist auf der Basis eines Signals in der Anlaufschaltung zu überwachen, ob eine am Schaltnetzteil eingangsseitig anliegende Netzspannung ausfällt. Der Zustand der Netzspannung kann an das Steuerteil signalisiert werden, damit dieses eventuell noch laufende Motoren des elektrisch verstellbaren Möbels geordnet anhalten sowie momentane Betriebsdaten wie eine entsprechende Motorposition eines angehaltenen Motors speichern kann. Dadurch wird es möglich, dass wenn die Netzspannung wieder zur Verfügung steht, ein weiterer Betrieb der Steuerung aus definierten Zuständen erfolgen kann. Durch die Überwachung der Netzspannung auf Basis des Signals in der Anlaufschaltung ist der Energiebedarf für die Überwachung gering gehalten und ermöglicht zudem eine unmittelbare Erkennung eines Netzspannungsausfalls. Dadurch kann die Energie, die beispielsweise in Pufferkapazitäten des Schaltnetzteils gespeichert ist, effizienter und damit länger genutzt werden.

Beispielsweise umfasst eine erfindungsgemäße Ausführungsform einer Steuerung ein Steuerteil, das zur Ansteuerung eines elektrisch verstellbaren Möbels eingerichtet ist, und ein das Steuerteil versorgendes Schaltnetzteil. Das Schaltnetzteil weist einen Schaltreglerbaustein zur Steuerung des Schaltnetzteils auf und kann in einen Normalbetriebszustand und in einen Ruhebetriebszustand geschaltet werden. Das Schaltnetzteil ist ferner eingerichtet, eine Versorgungsspannung für den Schaltreglerbaustein in dem Ruhebetriebszustand durch eine Anlaufschaltung getaktet bereitzustellen. Das Schaltnetzteil weist eine Netzausfallerkennungsschaltung auf, die eingerichtet ist, einen Ausfall einer im Schaltnetzteil eingangseitig anliegende Netzspannung auf der Basis eines Signals in der Anlaufschaltung zu detektieren und an das Steuerteil zu signalisieren.

Durch die Nutzung eines Signals, beispielsweise einer Spannung oder eines Stroms, in der Anlaufschaltung zur Überwachung der Netzspannung beziehungsweise einer Detektion eines Netzspannungsausfalls ist der Energiebedarf durch die Netzspannungsausfallerkennung nur geringfügig erhöht, insbesondere im Vergleich zu einer Netzspannungsausfallerkennung, die unabhängig von einer Anlaufschaltung aufgebaut wird.

Beispielsweise kann das Schaltnetzteil durch ein Bereitschaftssignal in einen Ruhebetriebszustand geschaltet werden. Dadurch kann der mittlere Leistungsbedarf der Steuerung, insbesondere des Schaltnetzteils reduziert werden. Dies senkt unter anderem die Betriebskosten der Steuerung. Zusätzlich kann aber auch das Schaltnetzteil für eine geringere Dauerleistung ausgelegt werden, was den Herstellungsaufwand und die Kosten des Schaltnetzteils reduziert. Vornehmlich ist das Bereitschaftssignal als logisches Signal ausgeführt.

Vorzugsweise sind das Steuerteil und das Schaltnetzteil in ein gemeinsames Gehäuse der Steuerung integriert. Durch die Integration des Steuerteils und des Schaltnetzteils in einem gemeinsamen Gehäuse der Steuerung lassen sich unter anderem Materialkosten einsparen. Beispielsweise lässt sich ein Schaltnetzteil, welches etwa in seiner Leistung an den Bedarf der Steuerung angepasst ist, in kleinerer Bauart als ein entsprechender Transformator mit vergleichbarer Leistung ausführen. Dementsprechend kann auch das Gehäuse der Steuerung, welches das Schaltnetzteil mit aufnimmt, kleiner ausgeführt werden als bei herkömmlichen Lösungen. Ein derartiges Gehäuse lässt sich somit auch leichter und unter optischen Gesichtspunkten besser an einem verstellbaren Möbel anbringen.

Vorzugsweise ist das Schaltnetzteil dazu eingerichtet, eine Gleichspannung abzugeben, die sich von dem Steuerteil zur Erzeugung wenigstens einer Ausgangsspannung der Steuerung verwenden lässt. Die Ausgangsspannung der Steuerung wird dabei üblicherweise einem oder mehreren Elektromotoren zugeführt, welche sowohl als Gleichstrom- oder als Wechselstrommotoren ausgeführt sein können.

In einer Ausführungsform weist das Schaltnetzteil eine erste und eine zweite Stufe auf, wobei die erste Stufe dazu eingerichtet ist, eine Zwischenspannung aus einer am Schaltnetzteil eingangsseitig anliegenden Netzspannung zu erzeugen. Die zweite Stufe ist dementsprechend dazu eingerichtet, die Gleichspannung im geschalteten Betrieb aus der Zwischenspannung zu erzeugen. Die zweite Stufe umfasst dazu beispielsweise den Schaltregler.

Das Schaltnetzteil kann in dem Normalbetriebszustand und in dem Ruhebetriebszustand betrieben werden. Im Normalbetriebszustand gibt das Schaltnetzteil eine Versorgungsspannung für das Steuerteil ab. Im Ruhebetriebszustand wird vom Schaltnetzteil nur eine Spannung mit geringer Lastfähigkeit oder gar keine Spannung abgegeben. Beispielsweise ist die Anlaufschaltung dazu eingerichtet, die Versorgungsspannung für den Schaltreglerbaustein aus der Netzspannung abzuleiten.

Somit wird im Ruhebetriebszustand eine Steuerung von Schaltvorgängen in der zweiten Stufe abgeschaltet, sodass bei nicht benötigter Ausgangsgleichspannung das Auftreten von Verlustleistung infolge unnötiger Schaltvorgänge minimiert wird. Durch die getaktete Versorgung des Schaltreglerbausteins befindet sich das Schaltnetzteil jedoch in einem Zustand, welcher einen schnellen Wechsel in dem Normalbetriebszustand ermöglicht, bei dem entsprechende Leistung am Ausgang des Schaltnetzteils bereitgestellt wird.

Erfindungsgemäß weist die Anlaufschaltung einen Energiespeicher, ein Widerstandselement und ein in Serie zu dem Widerstandselement geschaltetes Detektionselement auf, das von der Netzausfallerkennungsschaltung umfasst ist. Bei einem Betrieb des Schaltreglerbausteins im Ruhebetriebszustand erfolgt eine Spannungsversorgung des Schaltreglerbausteins über den Energiespeicher, beispielsweise einen Kondensator. Dieser wird über das Widerstandselement, welches vorzugsweise hochohmig gewählt wird, aufgeladen, wobei sich durch einen Widerstandswert des Widerstandselements ein bestimmter Ladestrom ergibt. Dadurch, dass das Detektionselement in Serie zu dem Widerstandselement geschaltet ist, kann beispielsweise auf der Basis des Stroms festgestellt werden, ob eine ausreichende Netzspannung vorliegt. Beispielsweise erfolgt eine Versorgung der Anlaufschaltung aus der Netzspannung. Der Widerstand ist beispielsweise an einen Netzspannungsanschluss angeschlossen, während der Energiespeicher mit einem Anschluss der Zwischenspannung verbunden ist. Dadurch wird beispielsweise eine Diode eines Gleichrichters in der ersten Stufe für eine Einweggleichrichtung verwendet, die unter anderem den Ladestrom liefert. Der Ladestrom des Energiespeichers wird dementsprechend gleichzeitig zur Netzspannungsüberwachung verwendet, so dass keine zusätzlichen Stromzweige für die Netzspannungsüberwachung erforderlich sind. Dies trägt weiter zum geringen Energiebedarf der Netzausfallerkennungsschaltung bei.

Beispielsweise umfasst das Detektionselement eine Leuchtdiode, welche von einem Optokoppler umfasst ist, der die Netzausfallerkennungsschaltung mit dem Steuerteil koppelt. Beispielsweise gibt die Leuchtdiode bei Vorliegen eines Ladestroms entsprechende Strahlung ab, die von einem zugehörigen Fototransistor des Optokopplers aufgenommen wird. Der Fototransistor ist beispielsweise elektrisch mit dem Steuerteil verbunden, insbesondere mit einem Prozessor oder Mikrocontroller des Steuerteils, welcher das Detektionssignal der Leuchtdiode beziehungsweise des Fototransistors auswertet. Durch den Optokoppler ist zudem eine galvanisch getrennte Kopplung zwischen dem Schaltnetzteil und dem Steuerteil hergestellt.

In einer besonderen Ausführungsform sind der Energiespeicher und das Widerstandselement der Anlaufschaltung derart dimensioniert, dass im Ruhebetriebszustand eine Zeitspanne zum Aufladen des Energiespeichers größer ist als eine Zeitspanne zum Entladen des Energiespeichers durch den Schaltreglerbaustein. Wie zuvor beschrieben ergibt sich durch einen bestimmten Widerstandswert des Widerstandselements ein bestimmter Ladestrom. Der Strom, der während des Betriebs beziehungsweise des Initialisierens des Schaltreglerbausteins benötigt wird und aus dem Energiespeicher gezogen wird, ist bei dieser Ausführungsform höher als der Ladestrom, so dass der Energiespeicher schneller entladen wird als er durch das Widerstandselement über die Zwischenspannung aufgeladen wird. Durch das Laden und Entladen des Energiespeichers ergibt sich ein getakteter Betrieb des Schaltreglerbausteins.

In weiteren Ausführungsformen weist die Anlaufschaltung eine Detektionsschaltung auf, die eingerichtet ist, auf der Basis einer Spannung über den Energiespeicher eine Verbindung zwischen der Anlaufschaltung und dem Schaltreglerbaustein zu steuern. Beispielsweise soll eine Versorgung des Schaltreglerbausteins mit der in der Anlaufschaltung gespeicherten Energie erst dann erfolgen, wenn die Spannung über den Energiespeicher ausreichend für einen Betrieb des Schaltreglerbausteins ist. Beispielsweise ist der Schaltreglerbaustein erst ab einer bestimmten Schwellenspannung aktiv, wobei auch unterhalb dieser Schwellenspannung bereits ein parasitärer Strom den Schaltreglerbaustein fließen und nutzlos verloren gehen kann. Durch die spannungsabhängige Verbindung des Schaltreglerbausteins mit der Anlaufschaltung wird das Auftreten eines ungenutzten parasitären Stroms im Schaltreglerbaustein verhindert. Dies verbessert die Effizienz der Steuerung, insbesondere durch eine Reduktion der Verluste der Steuerung im Ruhebetriebszustand bzw. in einem Standby-Betrieb.

Erfindungsgemäß ist die Detektionsschaltung eingerichtet die Verbindung zwischen der Anlaufschaltung und dem Schaltreglerbaustein herzustellen, wenn die Spannung über den Energiespeicher größer als ein erster insbesondere größerer Schwellwert ist, und die Verbindung zwischen der Anlaufschaltung und dem Schaltreglerbaustein zu trennen, wenn die Spannung über den Energiespeicher kleiner als ein zweiter, insbesondere kleinerer Schwellwert ist. Vorzugsweise ist der erste Schwellwert größer als die Schwellenspannung, bei der der Schaltreglerbaustein aktiv wird. Der zweite Schwellwert kann beispielsweise unterhalb dieser Schwellenspannung gewählt werden, so dass eine Verbindung der Anlaufschaltung mit dem Schaltreglerbaustein getrennt wird, nachdem der Schaltreglerbaustein durch Verbrauch der gespeicherten Energie in einen inaktiven Modus gelangt ist.

Durch den Vergleich mit einem ersten und einem zweiten Schwellwert kann eine Hysteresekurve erreicht werden, die eine effiziente Nutzung der in der Anlaufschaltung gespeicherten Energie ermöglicht.

In verschiedenen Ausführungsformen ist das Steuerteil eingerichtet, bei Signalisierung eines Ausfalls der Netzspannung durch die Netzausfallerkennungsschaltung angeschlossene Motoren des elektrisch verstellbaren Möbels anzuhalten und aktuelle Betriebsdaten, insbesondere eine oder mehrere Motorpositionen, zu speichern.

Eine derartige Steuerung, wie sie in den verschiedenen Ausführungsformen beschrieben wurde, kann für beliebige elektrisch verstellbare Möbel wie zum Beispiel höhenverstellbare Tische, Betten, insbesondere Krankenhausbetten oder ähnliches verwendet werden. Durch den geringen Energieverbrauch, insbesondere in dem Ruhebetriebszustand, bei dem keine Verstellung des Möbels erfolgt, lässt sich die Steuerung einfach integrieren. Dies ist unter anderem auch bedingt durch die geringere Wärmeentwicklung wegen der geringeren Verluste im Ruhebetriebszustand.

Die Erfindung wird nachfolgend an Ausführungsbeispielen anhand der Figuren näher erläutert. Funktions- beziehungsweise wirkungsgleiche Elemente tragen dabei gleiche Bezugszeichen.

Es zeigen:
- Figur 1: ein Ausführungsbeispiel einer Steuerung,
- Figur 2: ein Ausführungsbeispiel eines Schaltnetzteils für eine Steuerung,
- Figur 3: ein erstes Ausführungsdetail eines Schaltnetzteils,
- Figur 4: ein zweites Ausführungsdetail eines Schaltnetzteils,
- Figur 5: ein drittes Ausführungsdetail eines Schaltnetzteils, und
- Figur 6: ein Signaldiagramm eines Spannungsvergleichs.

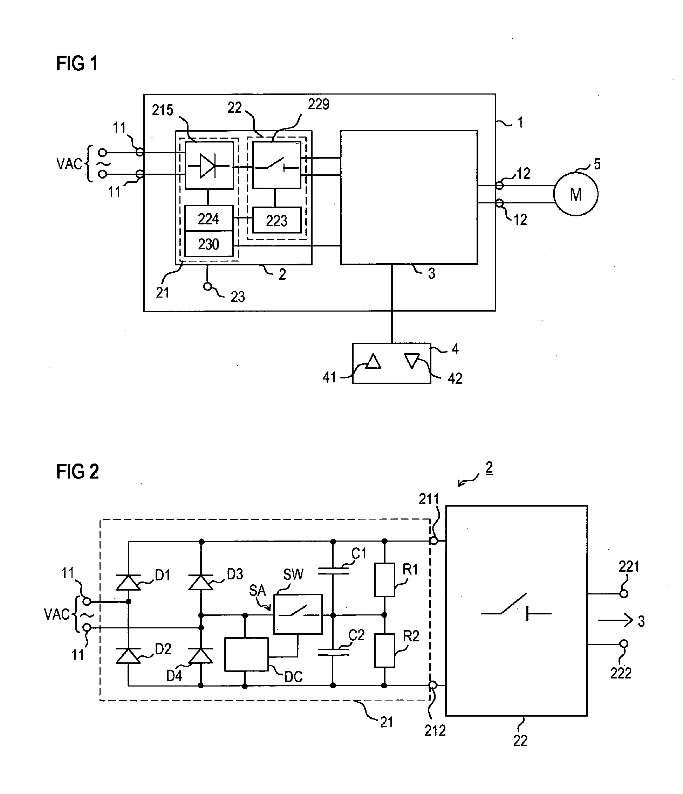

Figur 1 zeigt ein Ausführungsbeispiel einer Steuerung für ein elektrisch verstellbares Möbel. Die Steuerung umfasst ein Gehäuse 1, in dem ein Schaltnetzteil 2 und ein Steuerteil 3 vorgesehen sind. Das Schaltnetzteil 2 ist eingangsseitig über Eingangsanschlüsse 11 mit einem Netzanschluss VAC verbunden. Ausgangsseitig ist an das Schaltnetzteil 2 das Steuerteil 3 angeschlossen, welches an seinem Ausgang mit Ausgangsanschlüssen 12 des Gehäuses 1 gekoppelt ist. Das Schaltnetzteil 2 weist einen Steuereingang 23 auf, an dem ein Bereitschaftssignals zur Steuerung in einen Ruhebetriebszustand zugeführt werden kann. Das Bereitschaftssignal kann in verschiedenen Ausführungen von dem Steuerteil 3 bereitgestellt und/oder im Schaltnetzteil 2 selbst erzeugt und/oder extern zugeführt werden. An die Ausgangsanschlüsse 12 ist in diesem Ausführungsbeispiel ein Motor 5 angeschlossen, welcher eine Verstellung des verstellbaren Möbels bewirken kann. An das Steuerteil 3 ist ferner ein Bedienteil 4 angeschlossen, welches Bedienelemente 41, 42 aufweist.

Das Schaltnetzteil 2 umfasst eine erste Stufe 21 und eine zweite Stufe 22. In der ersten Stufe 21 ist unter anderem ein Gleichrichterblock 215 vorgesehen, welcher aus der eingangsseitig anliegenden Netzspannung eine Zwischenspannung erzeugt. Ferner umfasst die erste Stufe 21 eine Anlaufschaltung 224, welche eingangsseitig mit Anschlüssen des Gleichrichterblocks 215 verbunden ist. An der Anlaufschaltung 224 ist eine Netzausfallerkennungsschaltung 230 angeordnet, welche ein Signal in der Anlaufschaltung 224 auswertet und ein entsprechendes Auswertungsergebnis an das Steuerteil 3 liefert. Die Anlaufschaltung 224 ist ausgangsseitig mit einem Schaltreglerbaustein 223 in der zweiten Stufe 22 verbunden, welcher eine Steuerung von Schaltmitteln 229 in der zweiten Stufe 22 vornimmt. Insbesondere ist die zweite Stufe 22 geeignet, aus der von der ersten Stufe 21 gelieferten Zwischenspannung eine Gleichspannung für das Steuerteil 3 im geschalteten Betrieb zu erzeugen.

Durch das Schaltnetzteil 2 kann eine am Netzanschluss VAC anliegende Netzwechselspannung in eine üblicherweise niedrigere Gleichspannung umgesetzt werden, welche von dem Steuerteil 3 zur Ansteuerung des Motors 5 verwendet werden kann. Obwohl in diesem Ausführungsbeispiel lediglich ein Motor 5 dargestellt ist, ist es dennoch ohne weiteres möglich, mehrere Motoren gemeinsam oder unabhängig voneinander über das Steuerteil 3 anzusteuern. Eine Bedienung der Steuerung erfolgt beispielsweise über die Bedienelemente 41, 42, welche eine Ansteuerung des Motors 5 durch das Steuerteil 3 bewirkt.

Der Eingangsanschluss 11 des Gehäuses 1 ist beispielsweise als herkömmliche Netzanschlussbuchse für gebräuchliche Netzanschlusskabel ausgeführt. Alternativ kann jedoch ein fest installiertes Kabel zum Anschluss an den Netzanschluss VAC vorgesehen werden. In ähnlicher Weise können der Motor beziehungsweise die Motoren über ein fest angeschlossenes Kabel oder alternativ über einen speziellen Motoranschluss als Ausgangsanschluss 12 mit dem Steuerteil 3 verbunden werden.

Das Bedienteil 4, das in diesem Ausführungsbeispiel als separate, über ein Bedienkabel an das Steuerteil 3 angeschlossene Baugruppe ausgeführt ist, kann in weiteren Ausführungsbeispielen auch direkt in das Gehäuse 1 integriert sein beziehungsweise derart mit dem Gehäuse 1 mechanisch verbunden sein, dass das Bedienteil 4 und das Gehäuse 1 eine integrierte Einheit bilden.

Ein Schaltnetzteil 2 gemäß dem vorliegenden Ausführungsbeispiel weist eine geringere Baugröße als ein Transformator herkömmlicher Bauart für eine entsprechende elektrische Leistung auf. Somit kann die Steuerung mit Schaltnetzteil 2 und Steuerteil 3 Platz sparend in einem kleineren Gehäuse 1 eingebaut werden, als dies mit herkömmlichen Transformatoren möglich wäre. Folglich kann eine derartige Steuerung auch mit geringerem Aufwand bezüglich Montage- und Produktionskosten an einem verstellbaren Möbel befestigt werden. Insbesondere kann die Steuerung in diesem Fall an ergonomisch und/oder optisch günstigeren Positionen des verstellbaren Möbels angebracht werden.

Die Größe des Schaltnetzteils und damit die Größe der gesamten Steuerung beziehungsweise des Gehäuses 1 der Steuerung hängt nicht nur von der benötigten maximalen elektrischen Leistung der Steuerung ab, sondern auch von einer zeitlichen Komponente, insbesondere einem Verhältnis zwischen erfahrungsgemäßen Werten für einen Lastfall und zwischen Lastfällen liegenden Ruhephasen. Beispielsweise wird ein Schaltnetzteil für eine Belastung von einer Minute bei darauf folgender Ruhephase von neun Minuten ausgelegt. Alternativ kann ein Schaltnetzteil für eine Belastung von zwei Minuten bei darauf folgender Ruhephase von achtzehn Minuten ausgelegt werden. Im Rahmen einer derartigen Dimensionierung kann die Baugröße des Schaltnetzteils 2 unter Umständen weiter reduziert werden. Dies wird unterstützt dadurch, dass das Schaltnetzteil 2 in den Ruhephasen durch das Bereitschaftssignal in einen Ruhebetriebszustand gesteuert werden kann, in dem sich das Schaltnetzteil und die gesamte Steuerung beispielsweise verbessert abkühlen können.

Die Netzausfallerkennungsschaltung 230 ist eingerichtet, eine Netzspannung am Netzanschluss VAC beziehungsweise an den Eingangsanschlüssen 11 zu überwachen und insbesondere einen Ausfall dieser Netzspannung zu detektieren. Diese Überwachung beziehungsweise Detektion erfolgt auf Basis eines Signals in der Anlaufschaltung 224, beispielsweise eines Stroms, der in einem Schaltungsteil der Anlaufschaltung 224 fließt oder einer Spannung, die an einem Schaltungsteil in der Anlaufschaltung 224 anliegt. Das Überwachungsergebnis beziehungsweise ein detektierter Netzspannungsausfall werden an das Steuerteil 3 übermittelt beziehungsweise signalisiert. Beispielsweise weist das Steuerteil 3 einen Mikrocontroller auf, welcher die Ansteuerung und Überwachung des angeschlossenen Motors 5 durchführt. Neben der Steuerung der Spannungsabgabe an den Ausgangsanschlüssen 12 erfolgt in dem Steuerteil 3 beziehungsweise dem Mikrocontroller auch eine Positionsüberwachung des Motors 5 beziehungsweise eine Einstellung des durch den Motor 5 eingestellten Möbels. Hierbei wird bei einer Bewegung beispielsweise nicht die absolute Position gemessen, sondern durch eine Überwachung von Relativbewegungen ermittelt. Dementsprechend ist es günstig, wenn das Steuerteil 3 zu jedem Betriebszeitpunkt eine exakte Information über die momentan vorliegenden Betriebsdaten, insbesondere die absolute Position kennt.

Bei einem Netzspannungsausfall, der von der Netzausfallerkennungsschaltung 230 detektiert und signalisiert wird, kann das Steuerteil 3 eventuell laufende Motoren unmittelbar anhalten und die aktuellen Betriebsdaten speichern. Dies ist möglich, da in dem Schaltnetzteil 2 üblicherweise Pufferkapazitäten vorhanden sind, die auch bei einem Netzspannungsausfall zumindest kurzzeitig Energie an das Steuerteil 3 zur Verfügung stellen können. Insbesondere kann die gespeicherte Energie in dem Steuerteil 3 zum Betrieb des Mikrocontrollers oder eines ähnlichen Prozessors verwendet werden, welcher üblicherweise nur einen geringen Energiebedarf hat. Durch die Detektion des Netzspannungsausfalls direkt in der Anlaufschaltung 224 wird unter anderem eine unmittelbare Erkennung des Netzspannungsausfalls gewährleistet, so dass das Steuerteil 3 nahezu unverzögert auf den Netzspannungsausfall reagieren kann. Dadurch wird ein gesichertes Herunterfahren des Systems bei einem Netzspannungsausfall und insbesondere die Möglichkeit eines geordneten Wiederanfahrens nach Wiederherstellung der Netzspannung gewährleistet. Zudem ist ein Energieverbrauch im Ruhebetriebszustand verringert.

Figur 2 zeigt ein Ausführungsbeispiel eines Schaltnetzteils 2, welches beispielsweise für einen Einsatz in einer Steuerung gemäß dem Ausführungsbeispiel in Figur 1 geeignet ist. Das Schaltnetzteil 2 weist eine erste Stufe 21 und eine zweite Stufe 22 auf. Dabei ist die erste Stufe 21 eingangsseitig an den Netzanschluss VAC und ausgangsseitig über Anschlüsse 211, 212 an die zweite Stufe 22 angeschlossen. Für einen Ausgang 221, 222 der zweiten Stufe 22 ist ein Anschluss an das Steuerteil 3 vorgesehen.

Die erste Stufe 21 des Schaltnetzteils 2 weist vier Gleichrichterdioden D1, D2, D3, D4 auf, welche wie ein Brückengleichrichter verschaltet sind. Insbesondere ist eine Serienschaltung der ersten und zweiten Diode D1, D2 sowie eine Serienschaltung der dritten und vierten Diode D3, D4 zwischen die Anschlüsse 211, 212 geschaltet. Ferner ist eine Serienschaltung eines ersten und eines zweiten Kondensators C1, C2 zwischen die Anschlüsse 211, 212 geschaltet. Parallel zum ersten Kondensator C1 ist ein erster Widerstand R1 angeordnet. In ähnlicher Weise ist parallel zum zweiten Kondensator C2 ein zweiter Widerstand R2 vorgesehen.

Die erste Stufe 21 weist ferner ein Schaltmittel SA auf, welches eine Detektions- und Steuereinheit DC und einen Schalter SW umfasst. Die Detektions- und Steuereinheit DC ist zwischen einen Verbindungsknoten der dritten und vierten Diode D3, D4 und den zweiten Ausgangsanschluss 212 geschaltet. Der Schalter SW verbindet den Verbindungsknoten zwischen der dritten und vierten Diode D3, D4 mit dem Verbindungsknoten des ersten und zweiten Kondensators C1, C2 beziehungsweise des ersten und zweiten Widerstands R1, R2. Eine Steuerung des Schalters SW erfolgt über die Detektions- und Steuereinheit DC.

Über den Schalter SW kann in der ersten Stufe 21 eine erste oder eine zweite Betriebsart ausgewählt werden. Beispielsweise ist in der ersten Betriebsart der Schalter SW in einer geöffneten Stellung, so dass keine elektrische Verbindung zwischen den Knoten der Kondensatoren C1, C2 beziehungsweise Widerstände R1, R2 und dem Verbindungsknoten der Dioden D3, D4 besteht. In diesem Fall arbeitet die von der ersten Stufe 21 umfasste Schaltung als Brückengleichrichter, mit dem die eingangsseitig anliegende Netzwechselspannung in eine an den Anschlüssen 211, 212 anliegende Gleichspannung als Zwischenspannung umgewandelt wird.

Die Kondensatoren C1, C2 dienen dabei in bekannter Weise zur Speicherung elektrischer Energie und zur Glättung der bereitgestellten Zwischenspannung. Um einen Spannungsabfall über die Kondensatoren C1, C2 gleichmäßig verteilen zu können, kann über die Widerstände R1, R2 ein Potentialausgleich erfolgen, was schaltungstechnisch in etwa einem kompensierten kapazitiven Spannungsteiler entspricht. Vorzugsweise weisen die Widerstände R1; R2 dazu gleiche beziehungsweise nahezu gleiche Widerstandswerte auf. Weiterhin sind auch Kapazitätswerte der Kondensatoren C1, C2 vorzugsweise annähernd gleich groß. Der Wert der ausgangsseitigen Zwischenspannung an den Anschlüssen 211, 212 ergibt sich in bekannter Weise aus der Spannungsamplitude der eingangsseitig anliegenden Netzwechselspannung, welche im europäischen Raum ungefähr 400 Volt beträgt.

In der zweiten Betriebsart ist der Schalter SW in einem geschlossenen Zustand, so dass der Verbindungsknoten der Dioden D3, D4 elektrisch mit dem Verbindungsknoten der Kondensatoren C1, C2 und dem Verbindungsknoten der Widerstände R1, R2 verbunden ist. Dadurch ergibt sich mit den Dioden D1, D2 jeweils eine Einweggleichrichtung, bei der sowohl der erste als auch der zweite Kondensator C1, C2 auf den Wert der Spannungsamplitude der eingangsseitig anliegenden Netzwechselspannung aufgeladen werden. Die Dioden D3, D4 werden hierbei in Sperrrichtung betrieben. Dementsprechend ergibt sich zwischen den Anschlüssen 211, 212 über die Kondensatoren C1, C2 ungefähr eine Verdopplung der eingangsseitig anliegenden Spannungsamplitude. Beispielsweise wird bei einer eingangsseitig anliegenden effektiven Netzwechselspannung von etwa 115 Volt jeder der Kondensatoren C1, C2 auf einen Spannungswert von zirka 200 Volt aufgeladen. Dadurch ergibt sich zwischen den Anschlüssen 211, 212 als resultierende Gleichspannung eine Zwischenspannung von zirka 400 Volt. Diese Spannung entspricht demnach im Wesentlichen der Ausgangsgleichspannung beziehungsweise Zwischenspannung der ersten Stufe in der ersten Betriebsart bei einer effektiven Eingangsspannung von 230 Volt. Somit kann für verschiedene Spannungswerte von Eingangswechselspannungen eine ungefähr gleichgroße Ausgangsgleichspannung beziehungsweise Zwischenspannung an den Anschlüssen 211, 212 bereitgestellt werden.

In diesem Ausführungsbeispiel ist die Detektions- und Steuereinheit DC dazu eingerichtet, einen Spannungswert am Verbindungsknoten der dritten und vierten Diode D3, D4 auszuwerten und damit einen Spannungsbereich zu detektieren, in dem die eingangsseitig anliegende Netzwechselspannung liegt. Alternativ oder zusätzlich kann auch ein Spannungswert am Verbindungsknoten der ersten und zweiten Diode D1, D2 ausgewertet werden. In Abhängigkeit dieser Detektion kann der Schalter SW in einen geöffneten oder in einen geschlossenen Zustand gesteuert werden, wodurch die Schaltung in der ersten oder in der zweiten Betriebsart betrieben wird. Beispielsweise erfolgt die Entscheidung, ob die Schaltung in der ersten oder in der zweiten Betriebsart betrieben wird, anhand eines Schwellwerts oder Referenzwerts, welcher von der Netzspannung überschritten beziehungsweise unterschritten wird.

Die von der ersten Stufe 21 bereitgestellte Zwischenspannung wird in der zweiten Stufe 22 im geschalteten Betrieb, ausgedrückt durch das Schaltersymbol der zweiten Stufe 22, in die von dem Steuerteil 3 benötigte Spannung an den Anschlüssen 221, 222 umgesetzt.

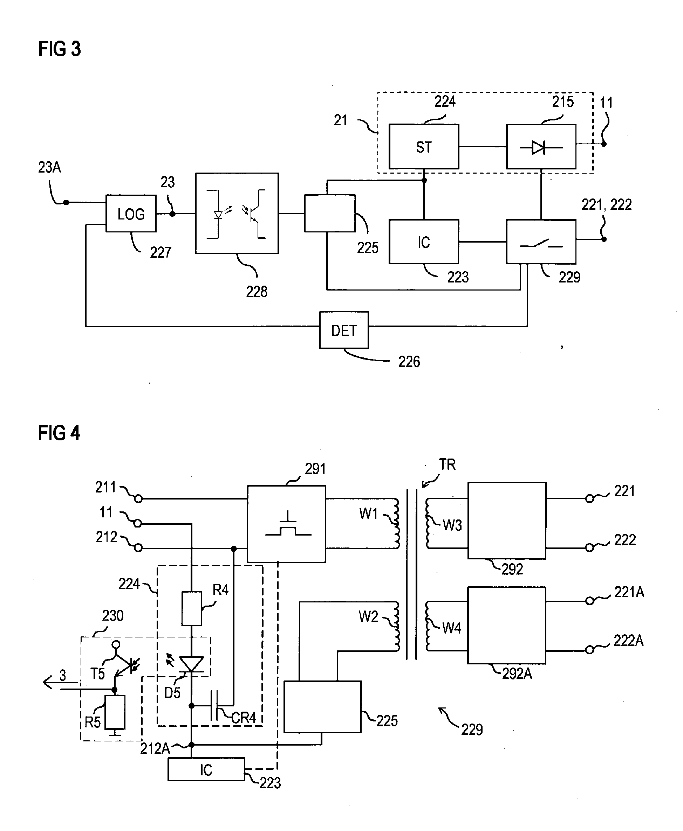

Figur 3 zeigt ein Ausführungsdetail eines beispielhaften Schaltnetzteils. In dem Blockschaltbild in Figur 3 sind ein Optokoppler 228, der eingangsseitig über ein logisches Element 227 mit dem Steuereingang 23 und einer Detektionsschaltung 226 und ausgangsseitig mit einer Betriebsversorgungsschaltung 225 verbunden ist, der Schaltreglerbaustein 223, und die erste Stufe 21 dargestellt, welche die Anlaufschaltung 224 und einen Gleichrichterblock 215 umfasst. Die Anlaufschaltung 224 ist eingangsseitig mit Anschlüssen des Gleichrichterblocks 215 der ersten Stufe 21 verbunden, welche, wie zuvor beschrieben, elektrisch mit einem Netzanschluss 11 zur Zuführung der Netzwechselspannung gekoppelt ist. Mit Hilfe der Anlaufschaltung 224 wird eine Versorgungsspannung geringer Leistung für den Schaltreglerbaustein 223 bereitgestellt. Im Übrigen wird der Baustein 223 über eine Spannung versorgt, welche durch die Betriebsversorgungsschaltung 225 aus einer Hilfsspannung in den Schaltmitteln 229 abgeleitet wird, wobei die Versorgung über die Betriebsversorgungsschaltung in Abhängigkeit einer Ansteuerung durch den Optokoppler 228 zu- oder abgeschaltet werden kann.

Im regulären Betrieb, also einem Normalbetriebszustand oder Leistungsbetriebszustand, wird die Betriebsversorgungsschaltung 225 derart angesteuert, dass eine dauerhafte Versorgung des Bausteins 223 erfolgt. In diesem Betriebszustand steuert der Baustein 223 das Schaltmittel 229 an, sodass dieses aus der von der ersten Stufe 21 bereitgestellten Zwischenspannung unter anderem eine Gleichspannung an den Anschlüssen 221, 222 erzeugt. Eine Versorgung des Bausteins 223 durch die Anlaufschaltung 224 ist in dieser Betriebsart nicht notwendig.

Wenn das Schaltnetzteil durch ein entsprechendes Signal, beispielsweise das Bereitschaftssignal am Eingang 23 in einen Ruhebetriebszustand gesteuert werden soll, wird die Betriebsversorgungsschaltung 225 so angesteuert, dass der Baustein 223 nicht dauerhaft versorgt ist, sondern seine Energie aus der Anlaufschaltung 224 bezieht. Eine Ansteuerung des Schaltmittels 229 ist in diesem Betriebszustand nur über einen beschränkten Zeitraum möglich, da die von der Anlaufschaltung 224 bereitgestellte Energie nicht für einen dauerhaften Schaltbetrieb des Bausteins 223 ausreicht. Entsprechendes ist vorgesehen, wenn beispielsweise durch die Detektionsschaltung 226 eine überhöhte Spannung im Schaltmittel 229 detektiert wird.

Beispielsweise erfolgt eine Ansteuerung der Betriebsversorgungsschaltung 225 über das logische Element 227, den Anschluss 23 und den Optokoppler 228, wenn das Bereitschaftssignal am Eingang 23A empfangen und/oder durch die Detektionsschaltung 226 erzeugt wird, wenn eine Überspannung im Schaltmittel 229 detektiert wird. Das Bereitschaftssignal zur Steuerung in den Ruhebetriebszustand kann beispielsweise in einer Ruhephase von dem Steuerteil 3 erzeugt werden. Wegen des beschränkten Zeitraums der Versorgung durch die Anlaufschaltung 224 arbeitet der Baustein 223 im Ruhebetriebszustand anders ausgedrückt im Taktbetrieb. Dieser Taktbetrieb funktioniert mit Hilfe der Anlaufschaltung 224, welche den Baustein 223 kurz hochfahren lässt und nach kurzer Zeit wieder stoppt, wenn bzw. weil keine Versorgung des Bausteins 223 über die Betriebsversorgungsschaltung 225 vorhanden ist. Der Baustein 223 wird also periodisch initialisiert und wieder abgeschaltet.

Im Gegensatz zu einem Leerlauf im Leistungsbetriebszustand, bei dem lediglich keine Leistung über die ausgangsseitig abgegebene Gleichspannung abgenommen wird, aber dennoch Verlustleistung durch Umschaltvorgänge entsteht, wird bei einem Leerlauf im Ruhebetriebszustand die Leistungsaufnahme der Schaltungsanordnung deutlich reduziert, da die genannten Schaltverluste nicht auftreten. Während des Ruhebetriebszustands gibt das Schaltnetzteil zwar nach außen eine Spannung ab, die unter Umständen auch ausreicht, eine Elektronik des angeschlossenen Steuerteils zu versorgen, nicht aber deren Leistungsteil. Um den Normalbetrieb oder Leistungsbetrieb wieder aufzunehmen, ist es erforderlich, dass das Schaltnetzteil 2 wieder entsprechend aktiviert wird.

Mit dem beschriebenen Ruhebetriebszustand kann somit der Leistungsbedarf des Schaltnetzteils so reduziert werden, dass beispielsweise bestimmte gesetzliche Umweltnormen, wie zum Beispiel Green Label, erfüllt werden.

Figur 4 zeigt ein weiteres Ausführungsdetail aus einem Schaltnetzteil. Im Blockschaltbild in Figur 4 sind ein Schalttransistorblock 291, der eingangsseitig an die Anschlüsse 211, 212 und ausgangsseitig an eine erste Wicklung W1 eines Transformators TR angeschlossen ist, die Anlaufschaltung 224, der Schaltreglerbaustein 223, die Betriebsversorgungsschaltung 225 und Schaltungsblöcke 292, 292a dargestellt. Die Betriebsversorgungsschaltung 225 ist eingangsseitig an Wicklungen W2 des Transformators TR angeschlossen. Die Wicklungen W1, W2 stellen eine Primärseite des Transformators TR dar, während Wicklungen W3, W4 sekundärseitig angeordnet sind und an die Schaltungsblöcke 292, 292a angeschlossen sind. Ein Ausgang der Betriebsversorgungsschaltung 225 ist an den Anschluss 212A gekoppelt, welcher an einen Versorgungsspannungseingang des Bausteins 223 angeschlossen ist. Eine Ansteuerung der Transistorschalter im Block 291 erfolgt durch den Schaltreglerbaustein 223. Mit Verweis auf Figur 3 sind der Transformator TR und die Schaltungselemente 291, 292, 292a vom Schaltmittel 229 umfasst.

Ferner ist an den Anschluss 212A die Anlaufschaltung 224 angeschlossen. Diese umfasst einen Widerstand R4, der in Serie mit einer Leuchtdiode D5 zwischen einen der Netzspannungsanschlüsse 11 und den Anschluss 212A geschaltet ist. Die Anlaufschaltung 224 umfasst ferner einen Kondensator CR4 als Energiespeicher, der den Anschluss 212 mit dem Anschluss 212A verbindet. Die Leuchtdiode D5 ist Teil der Netzausfallerkennungsschaltung 230, die zudem einen Fototransistor T5 mit einem in Serie geschalteten Widerstand R5 aufweist. Die Leuchtdiode D5 und der Fototransistor T5 arbeiten zusammen nach dem Prinzip eines Optokopplers. Eine optische Verbindung zwischen Leuchtdiode D5 und Fototransistor T5 kann durch unmittelbare Nähe der beiden Elemente erfolgen. Alternativ kann auch ein Lichtleiter zwischen den Elementen vorgesehen werden, so dass der Fototransistor T5 und der Widerstand R5 auch an anderer Stelle der Steuerung, beispielsweise im Steuerteil 3 positioniert werden können. Ein Verbindungsknoten zwischen dem Transistor T5 und dem Widerstand R5 ist in jedem Fall zum Steuerteil 3 geführt, um ein entsprechendes Überwachungsergebnis beziehungsweise Detektionsergebnis der Netzausfallerkennungsschaltung 230 an das Steuerteil zu signalisieren.

Im Ruhebetriebszustand wird der Kondensator CR4 über einen Strom aufgeladen, der über den Widerstand R4 direkt aus der Netzspannung entnommen wird. Beispielsweise wird durch die Verschaltung der Anlaufschaltung 224 an den Anschlüssen 11 und 212 eine der Dioden D2, D4 des Gleichrichters in der ersten Stufe 21 für eine Einweggleichrichtung verwendet, die unter anderem den Ladestrom liefert. Dieser Ladestrom dient gleichzeitig zum Betrieb der Leuchtdiode D5. Wenn die Netzspannung vorhanden ist, wird Strahlung von der Leuchtdiode D5 abgegeben und vom Fototransistor T5 aufgenommen, um ein entsprechendes Signal an das Steuerteil 3 zu liefern. Wenn die Netzspannung ausfällt, fließt kein Strom durch den Widerstand R4 beziehungsweise die Leuchtdiode D5. Dementsprechend wird vom Fototransistor T5 keine Strahlung mehr detektiert, was als Netzspannungsausfall an das Steuerteil 3 signalisiert wird. Somit ist eine unmittelbare und schnelle Erkennung eines Netzspannungsausfalls gewährleistet. Zudem wird kein zusätzlicher Strom für die Leuchtdiode D5 benötigt, da direkt der Ladestrom für den Kondensator CR4 für die Überwachung der Netzspannung verwendet wird.

Wenn durch das Laden mit dem Strom durch den Widerstand R4 bzw. die Leuchtdiode D5 ein bestimmter Spannungswert im Kondensator CR4 erreicht ist, beginnt der Schaltreglerbaustein 223 sich zu initialisieren, um einen Schaltbetrieb beziehungsweise eine Ansteuerung der Transistorschalter im Schalttransistorblock 291 vorzunehmen. Jedoch ist der Strombedarf des Bausteins 223 größer als der Ladestrom durch den Widerstand R4, sodass es zu einer Entladung des Kondensators CR4 kommt. Falls demnach keine Spannungsversorgung zusätzlich über die Betriebsversorgungsschaltung 225 erfolgt, wird der Baustein 223 wieder heruntergefahren und der Kondensator CR4 erneut aufgeladen. Eine Ansteuerung der Betriebsversorgungsschaltung 225 erfolgt beispielsweise wiederum durch einen hier aus Übersichtsgründen nicht dargestellten Optokoppler 228, der ein Bereitschaftssignal übertragen kann. Somit ergibt sich eine periodische Ladung und Entladung des Kondensators CR4 beziehungsweise ein periodischer Betrieb des Bausteins 223 im Ruhebetriebszustand.

Wenn die Betriebsversorgungsschaltung 225 jedoch in den Normalbetriebszustand geschaltet wird, werden durch initiale Schaltvorgänge im Schalttransistorblock 291 ein Strom in der Wicklung W1 bewirkt und eine Spannung in der Wicklung W2 induziert, welche als Hilfsspannung für die Betriebsversorgungsschaltung 225 dient, aus der die Versorgungsspannung am Anschluss 212A abgeleitet werden kann. Diese Spannung reicht für einen Dauerbetrieb des Bausteins 223 und damit des Schaltnetzteils aus. Sekundärseitig werden dementsprechend Spannungen in den Wicklungen W3, W4 induziert, welche durch die Schaltungsteile 292, 292a in die Gleichspannung an den Anschlüssen 221, 222 beziehungsweise eine zusätzliche Gleichspannung an den Anschlüssen 221a, 222a umgesetzt werden.

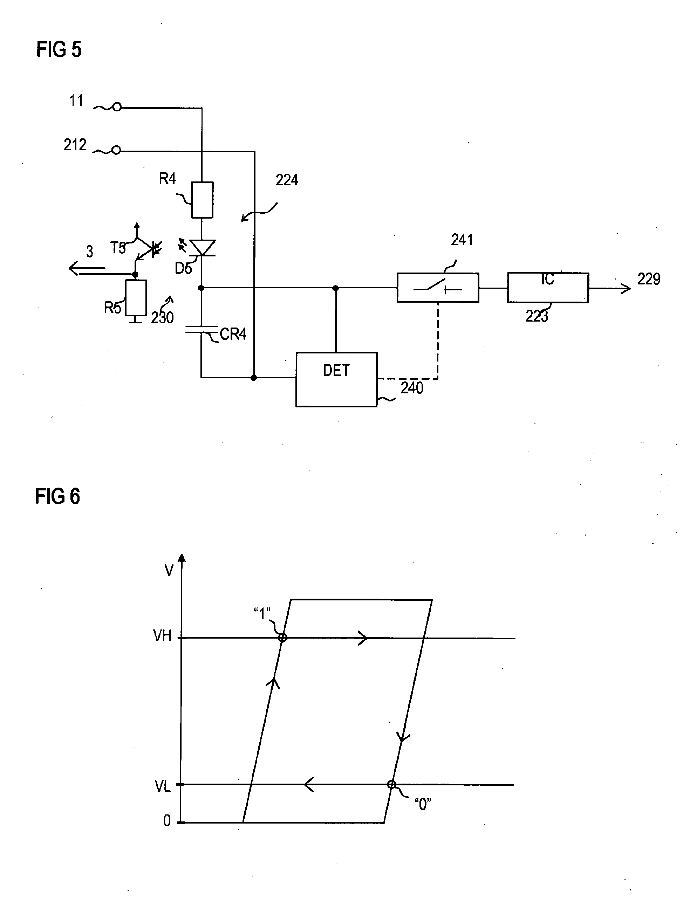

Figur 5 zeigt ein weiteres Ausführungsdetail eines beispielhaften Schaltnetzteils, welches insbesondere als Detail zu der in Figur 4 dargestellten Ausführungsform verstanden werde kann. In dem Blockschaltbild in Figur 5 sind insbesondere die Anlaufschaltung 224 mit dem Widerstand R4, dem Kondensator CR4 mit der Leuchtdiode D5 beziehungsweise der Netzausfallerkennungsschaltung 230 dargestellt. Ferner ist eine Detektionsschaltung 240 vorgesehen, die eingangsseitig mit den zwei Anschlüssen des Kondensators CR4 verbunden ist, um eine Spannung über dem Kondensator CR4 messen zu können. Ausgangsseitig ist die Detektionsschaltung 240 mit einer Schalteinheit 241 zu deren Ansteuerung verbunden, welche den Ausgang der Anlaufschaltung 224 am Verbindungsknoten zwischen dem Kondensator CR4 und der Leuchtdiode D5 mit dem Schaltreglerbaustein 223 koppelt. Die Betriebsversorgungsschaltung 225 und weitere Elemente sind aus Übersichtsgründen in Figur 5 nicht dargestellt. Ein Ausgang des Schaltreglerbausteins 223 ist in Analogie zu der in Figur 3 dargestellten Ausführungsform mit den Schaltmitteln 229 gekoppelt.

Der Schaltreglerbaustein 223 benötigt beispielsweise eine bestimmte Schwellenspannung, um aktiv arbeiten zu können. Wenn eine Spannung an einem Versorgungsanschluss des Schaltreglerbausteins 223 anliegt, die geringer als diese Schwellenspannung ist, fließen zwar parasitäre Ströme, die jedoch lediglich zu Energieverlusten und einer Erwärmung der Schaltung führen. Dementsprechend wird mit der Detektionsschaltung 240 überwacht, ob die Spannung über dem Kondensator CR4 einen bestimmten Schwellwert überschreitet, der ausreichend für einen aktiven Betrieb des Schaltreglerbausteins 223 ist. In diesem Fall wird über die Schalteinheit 241 eine entsprechende Verbindung zwischen der Anlaufschaltung 224 und dem Schaltreglerbaustein 223 hergestellt. Wenn durch den Betrieb des Schaltreglerbausteins 223, der durch die Anlaufschaltung 224 versorgt ist, die Spannung am Kondensator CR4 wieder sinkt, kann dies durch die Detektionsschaltung 240 ebenfalls erkannt werden, um dann die Verbindung über die Schalteinheit 241 zu trennen.

Das Verbinden und Trennen kann beispielsweise mit einer Hysterese erfolgen. Figur 6 zeigt ein beispielhaftes Signaldiagramm mit einem ersten Schwellwert VH und einem zweiten Schwellwert VL bezogen auf eine am Kondensator CR4 anliegende Spannung V. Wenn die Spannung V ansteigt und den ersten Schwellwert VH, der größer ist als der zweite Schwellwert VL, überschreitet, wird die Schalteinheit 241 geschlossen, dargestellt durch den Schaltzustand "1". Wenn die Spannung V über den Kondensator CR4 wieder abfällt und den unteren Schwellwert VL unterschreitet, wird die Schalteinheit 241 geöffnet, dargestellt durch den Schaltzustand "0". Die Schwellenspannung, ab der der Schaltreglerbaustein 223 aktiv betrieben werden kann, liegt beispielsweise zwischen dem ersten und dem zweiten Schwellwert VH, VL.

Mit den dargestellten Ausführungsformen lässt sich eine Steuerung mit geringem Energieverbrauch erreichen. Zudem wird durch die beschriebene Netzausfallerkennung eine erhöhte Betriebssicherheit der Steuerung erreicht. Die Anordnung der Netzausfallerkennung in der Anlaufschaltung bewirkt einen geringen Energieverbrauch der Steuerung, insbesondere in einem Standby-Modus oder Ruhebetriebszustand.

## Patentansprüche

1. Steuerung, umfassend
- ein Steuerteil (3), das zur Ansteuerung eines elektrisch verstellbaren Möbels eingerichtet ist; und
- ein das Steuerteil (3) versorgendes Schaltnetzteil (2), das einen Schaltreglerbaustein (223) zur Steuerung des Schaltnetzteils (2) aufweist und in einen Normalbetriebszustand und in einen Ruhebetriebszustand geschaltet werden kann;
- wobei das Schaltnetzteil (2) eingerichtet ist, eine Versorgungsspannung für den Schaltreglerbaustein (223) in dem Ruhebetriebszustand durch eine Anlaufschaltung (224) getaktet bereitzustellen; und
- wobei das Schaltnetzteil (2) eine Netzausfallerkennungsschaltung (230) aufweist, die eingerichtet ist, einen Ausfall einer am Schaltnetzteil (2) eingangsseitig anliegenden Netzspannung auf der Basis eines Signals in der Anlaufschaltung (224) zu detektieren und an das Steuerteil (3) zu signalisieren;
**gekennzeichnet dadurch, dass**
- die Anlaufschaltung (224) einen Energiespeicher (CR4), ein Widerstandselement (R4) und ein in Serie zu dem Widerstandselement (R4) geschaltetes Detektionselement (D5) aufweist, das von der Netzausfallerkennungsschaltung (230) umfasst ist;
- die Anlaufschaltung (224) und der Schaltreglerbaustein (223) über eine Schalteinheit (241) verbindbar sind; und
- die Anlaufschaltung (224) eine Detektionsschaltung (240) umfasst, die eingerichtet ist, auf der Basis einer Spannung über den Energiespeicher (CR4) die Verbindung zwischen der Anlaufschaltung (224) und dem Schaltreglerbaustein (223) mittels der Schalteinheit (241) derart zu steuern, dass die genannte Verbindung hergestellt wird, wenn die Spannung über den Energiespeicher (CR4) größer als ein erster, größerer Schwellwert (VH) ist, und die genannte Verbindung zwischen der Anlaufschaltung (224) und dem Schaltreglerbaustein (223) getrennt wird, wenn die Spannung über den Energiespeicher (CR4) kleiner als ein zweiter, kleinerer Schwellwert (VL) ist.

2. Steuerung nach Anspruch 1,
bei der das Herstellen und Trennen der genannten Verbindung mit einer Hysterese erfolgen.

3. Steuerung nach Anspruch 1 oder 2,
bei der das Detektionselement (D5) eine Leuchtdiode umfasst, welche von einem Optokoppler (D5, T5) umfasst ist, der die Netzausfallerkennungsschaltung (230) mit dem Steuerteil (3) koppelt.

4. Steuerung nach einem der Ansprüche 1 bis 3,
bei der der Energiespeicher (CR4) und das Widerstandselement (R4) derart dimensioniert sind, dass im Ruhebetriebszustand eine Zeitspanne zum Aufladen des Energiespeichers (CR4) größer ist als eine Zeitspanne zum Entladen des Energiespeichers (CR4) durch den Schaltreglerbaustein (223).

5. Steuerung nach einem der Ansprüche 1 bis 4,
bei der das Schaltnetzteil (2) eine erste und eine zweite Stufe (21, 22) aufweist, wobei
- die erste Stufe (21) eingerichtet ist, eine Zwischenspannung aus der Netzspannung zu erzeugen;
- die zweite Stufe (22) den Schaltreglerbaustein (223) umfasst und eingerichtet ist, die Gleichspannung mittels des Schaltreglerbausteins (223) in geschaltetem Betrieb aus der Zwischenspannung zu erzeugen; und
- die Anlaufschaltung (224) eingerichtet ist, die Versorgungsspannung für den Schaltreglerbaustein (223) aus der Netzspannung abzuleiten.

6. Steuerung nach Anspruch 5, bei der das Schaltnetzteil (2) eingerichtet ist, eine Versorgungsspannung für den Schaltreglerbaustein (223) in dem Normalbetriebszustand dauerhaft durch eine Betriebsversorgungsschaltung (225) bereitzustellen, die eingerichtet ist, die Versorgungsspannung für den Schaltreglerbaustein (223) aus einer Hilfsspannung in der zweiten Stufe (22) abzuleiten.

7. Steuerung nach einem der Ansprüche 1 bis 6,
bei der das Steuerteil (3) eingerichtet ist, bei Signalisierung eines Ausfalls der Netzspannung durch die Netzausfallerkennungsschaltung (230) Motoren (5) des elektrisch verstellbaren Möbels anzuhalten und aktuelle Betriebsdaten, insbesondere eine oder mehrere Motorpositionen, zu speichern.

8. Steuerung nach einem der Ansprüche 1 bis 7, bei der das Schaltnetzteil (2) eingerichtet ist, eine Gleichspannung abzugeben, die dem Steuerteil (3) zur Erzeugung wenigstens einer Ausgangsspannung der Steuerung zugeführt wird.

## Claims

1. Control means, comprising
- a control segment (3) that is designed for driving an electrically adjustable piece of furniture; and
- a switched-mode power supply unit (2) that supplies power to the control segment (3), wherein said switched-mode power supply unit features a switching regulator component (223) for controlling the switched-mode power supply unit (2) and can be switched into a normal operating mode and into an idle mode;
- wherein the switched-mode power supply unit (2) is designed for making available a supply voltage for the switching regulator component (223) in a clocked fashion with the aid of a start-up circuit (224) in the idle mode; and
- wherein the switched-mode power supply unit (2) features a power failure detection circuit (230) that is designed for detecting a failure of a line voltage applied to the input side of the switched-mode power supply unit (2) based on a signal within the start-up circuit (224) and for signaling this failure to the control segment (3);
**characterized in that**.
- the start-up circuit (224) features an energy storage (CR4), a resistor element (R4) and a detection element (D5) that is connected in series to the resistor element (R4) and forms part of the power failure detection circuit (230);
- the start-up circuit (224) and the switching regulator component (223) are connectable via a switching unit (241); and
- the start-up circuit (224) comprises a detection circuit (240) that is designed for controlling a connection between the start-up circuit (224) and the switching regulator component (223) based on a voltage across the energy storage (CR4), such that said connection is established when the voltage across the energy storage (CR4) exceeds a first, higher threshold value (VH), and such that said connection is separated when the voltage across the energy storage (CR4) falls short of a second, lower threshold value (VL).

2. Control means according to Claim 1,
in which establishing and separating of said connection are performed with a hysteresis.

3. Control means according to Claim 1 or 2,
in which the detection element (D5) comprises a light-emitting diode that forms part of an optocoupler (D5, T5), wherein said optocoupler couples the power failure detection circuit (230) to the control segment (3).

4. Control means according to one of Claims 1 to 3,
in which the energy storage (CR4) and the resistor element (R4) are dimensioned such that a time period for charging the energy storage (CR4) is longer in the idle mode than a time period for discharging the energy storage (CR4) by the switching regulator component (223).

5. Control means according to one of Claims 1 to 4,
in which the switched-mode power supply unit (2) comprises a first and a second stage (21, 22), wherein
- the first stage (21) is designed for generating an intermediate voltage from the line voltage;
- the second stage (22) comprises the switching regulator component (223) and is designed for generating the D.C. voltage from the intermediate voltage by means of the switching regulator component (223) during the switched-mode operation; and
- the start-up circuit (224) is designed for deriving the supply voltage for the switching regulator component (223) from the line voltage.

6. Control means according to Claim 5,
in which the switched-mode power supply unit (2) is designed for permanently making available a supply voltage for the switching regulator component (223) in the normal operating mode by means of an operational supply circuit (225) that is designed for deriving the supply voltage for the switching regulator component (223) from an auxiliary voltage in the second stage (22).

7. Control means according to one of Claims 1 to 6,
in which the control segment (3) is designed for stopping motors (5) of the electrically adjustable piece of furniture and for storing current operational data, particularly one or more motor positions, when a failure of the line voltage is signaled by the power failure detection circuit (230).

8. Control means according to one of Claims 1 to 7,
in which the switched-mode power supply unit (2) is designed for delivering a D.C. voltage that is fed to the control segment (3) in order to generate at least one output voltage of the control means.

## Revendications

1. Commande, comprenant
- une partie de commande (3) qui est conçue pour commander un meuble à positionnement électrique ; et
- une alimentation à découpage (2) qui alimente la partie de commande (3), laquelle possède un composant régulateur à découpage (223) destiné à commander l'alimentation à découpage (2) et peut être commutée dans un état de fonctionnement normal et dans un état de fonctionnement de veille ;
- l'alimentation à découpage (2) étant conçue pour délivrer de manière cadencée une tension d'alimentation pour le composant régulateur à découpage (223) dans l'état de fonctionnement de veille par le biais d'un circuit de démarrage (224) ; et
- l'alimentation à découpage (2) possédant un circuit de détection de panne de réseau (230) qui est conçu pour détecter une coupure d'une tension de réseau appliquée du côté de l'entrée de l'alimentation à découpage (2) sur la base d'un signal dans le circuit de démarrage (224) et pour la signaler à la partie de commande (3) ;
**caractérisée en ce que**
- le circuit de démarrage (224) possède un accumulateur d'énergie (CR4), un élément résistif (R4) et un élément de détection (D5) branché en série avec l'élément résistif (R4), lequel est englobé par le circuit de détection de panne de réseau (230) ;
- le circuit de démarrage (224) et le composant régulateur à découpage (223) peuvent être raccordés par le biais d'une unité de commutation (241) ; et
- le circuit de démarrage (224) comprend un circuit de détection (240) qui est conçu pour commander, sur la base d'une tension aux bornes de l'accumulateur d'énergie (CR4), la liaison entre le circuit de démarrage (224) et le composant régulateur à découpage (223) par l'intermédiaire de l'unité de commutation (241) de telle sorte que ladite liaison est établie lorsque la tension aux bornes de l'accumulateur d'énergie (CR4) est supérieure à une première valeur de seuil (VH) plus grande, et que ladite liaison entre le circuit de démarrage (224) et le composant régulateur à découpage (223) est coupée lorsque la tension aux bornes de l'accumulateur d'énergie (CR4) est inférieure à une deuxième valeur de seuil (VL) plus petite.

2. Commande selon la revendication 1, avec laquelle l'établissement et la coupure de ladite liaison s'effectuent avec une hystérésis.

3. Commande selon la revendication 1 ou 2, avec laquelle l'élément de détection (D5) comprend une diode électroluminescente qui est englobée par un optocoupleur (D5, T5), lequel connecte le circuit de détection de panne de réseau (230) à la partie de commande (3).

4. Commande selon l'une des revendications 1 à 3, avec laquelle l'accumulateur d'énergie (CR4) et l'élément résistif (R4) sont dimensionnés de telle sorte qu'à l'état de fonctionnement de veille, un intervalle de temps pour charger l'accumulateur d'énergie (CR4) est supérieur à un intervalle de temps pour décharger l'accumulateur d'énergie (CR4) par le composant régulateur à découpage (223).

5. Commande selon l'une des revendications 1 à 4, avec laquelle l'alimentation à découpage (2) possède un premier et un deuxième étage (21, 22),
- le premier étage (21) étant conçu pour générer une tension intermédiaire à partir de la tension de réseau ;
- le deuxième étage (22) comprenant le composant régulateur à découpage (223) et étant conçu pour générer la tension continue par l'intermédiaire du composant régulateur à découpage (223) en mode commuté à partir de la tension intermédiaire ; et
- le circuit de démarrage (224) étant conçu pour dériver de la tension de réseau la tension d'alimentation pour le composant régulateur à découpage (223).

6. Commande selon la revendication 5, avec laquelle l'alimentation à découpage (2) est conçue pour délivrer une tension d'alimentation pour le composant régulateur à découpage (223) dans l'état de fonctionnement normal en continu par le biais d'un circuit d'alimentation de service (225), lequel est conçu pour dériver la tension d'alimentation pour le composant régulateur à découpage (223) d'une tension auxiliaire dans le deuxième étage (22).

7. Commande selon l'une des revendications 1 à 6, avec laquelle la partie de commande (3) est conçue pour, en cas de signalisation d'une coupure de la tension de réseau par le circuit de détection de panne de réseau (230), arrêter les moteurs (5) du meuble à positionnement électrique et mettre en mémoire les données de fonctionnement actuelles, notamment une ou plusieurs positions de moteur.

8. Commande selon l'une des revendications 1 à 7, avec laquelle l'alimentation à découpage (2) est conçue pour délivrer une tension continue qui est acheminée à la partie de commande (3) en vue de générer au moins une tension de sortie de la commande.
